# EUROPEAN PATENT SPECIFICATION

(11) **EP 3 168 439 B1**
(45) Date of publication and mention of the grant of the patent: **20.03.2019**
(21) Application number: 15194826.2
(22) Date of filing: 16.11.2015
(51) Int. Cl.: F01N 3/20, G01N 1/40

(54) **DEBUBBLING SLEEVE FOR FLUID SENSORS AND SENSOR SYSTEMS COMPRISING SAME**
BLASENENTFERNUNGSHÜLSE FÜR FLUIDSENSOREN UND SENSORSYSTEME DAMIT
MANCHON DE DÉBULLAGE POUR DES DÉTECTEURS DE FLUIDE ET SYSTÈMES DE DÉTECTION COMPORTANT UN TEL DISPOSITIF

(43) Date of publication of application: 17.05.2017
(73) Proprietor: Wema System AS, 5258 Blomsterdalen (NO)
(72) Inventor: Thomsen, Frank, 5253 Sandsli (NO)
(74) Representative: Grünecker Patent- und Rechtsanwälte PartG mbB

(56) References cited:
- EP-A1- 1 669 742
- EP-A1- 2 908 120
- EP-A2- 1 947 451
- JP-A- 2005 299 441
- US-A1- 2015 089 996

## Description

The invention relates to sensor systems for fluid systems, in particular for a urea tank, the system having a debubbling sleeve for keeping gas bubbles off a fluid sensor of the sensor system.

Fluid sensors and sensor systems are known in the prior art. Fluid sensors can be adapted for measuring quantities such as fluid levels, compound concentrations or purity. If a fluid system is exposed to movements such as vibrations, for example in a motorized device, then the fluid may tend to produce bubbles of a surrounding gas such as air. These bubbles may influence the sensor and lead to inaccurate measurements. Urea-based liquids such as diesel exhaust fluid (DEF) are especially known for having a high propensity to accumulate gases and to form bubbles.

In US 2015/0089996 A1, a system for reducing the aeration of a sensor system is described, in which the sensor system is covered by a mesh filter which has the overall shape of a half pipe. The system is complex in its shape and therefore laborious and costly to produce. In EP 1 947 451 A2, a system is described in which a sensor is surrounded by two cylinders, each cylinder being provided with slits for the fluid.

It is therefore an object of the invention to provide a cost-efficient solution for a fluid sensor, especially for urea-based liquids, which overcomes the drawbacks of the known solutions and which decreases the amount of bubbles in the fluid around the sensor, thereby increasing the accuracy of the sensor, but, at the same time, avoiding impacts on the intake of the fluid.

For a sensor system as mentioned above, the object is achieved by a system according to claim 1.

For another embodiment of the sensor system as mentioned above, the object is achieved by a system comprising at least one fluid sensor and at least one suction tube with an inlet port for the fluid, wherein the sensor system basically extends along a longitudinal axis, wherein the system further comprises at least one debubbling sleeve according to the invention, wherein the at least one fluid sensor is arranged inside the receptacle of the debubbling sleeve, wherein the debubbling sleeve comprises an extension which basically extends parallel to a radial direction of the longitudinal axis of the sensor system, and wherein at least one through-opening of the debubbling sleeve is arranged on the distal end of the extension, forming a sediment exhaust opening.

This solution according to the invention allows for effectively preventing the formation of bubbles at least around a sensor. If a sensor is placed inside the receptacle, then the receptacle surrounds the sensor and prevents or at least decreases the movement of fluid in the vicinity of the sensor. Thereby, the creation of bubbles may be decreased at least around the sensor. Further, the transport of bubbles into the receptacle may be prevented. The at least one through-opening can be helpful to avoid negative impacts of the debubbling sleeve on the sensor and/or the sensor system. When mounted on a sensor system, a suction tube of the system may, for example, protrude through at least one through-opening such that an inlet port of the suction tube may be arranged outside the receptacle. Thereby, suction of fluid will not be influenced by the debubbling sleeve. At least one through-opening may be used as a sediment exhaust opening to allow sediments to leave the receptacle in order to not influence the accuracy of the at least one sensor. The debubbling sleeve and/or the sensor systems according to the invention may especially be used in fluid tanks, in particular in DEF-tanks.

In the following, further improvements of the invention are described. The additional improvements may be combined independently of each other, depending on whether a particular advantage of a particular improvement is needed in a specific application.

For the sake of brevity, the debubbling sleeve is named sleeve in the following where appropriate.

According to a first advantageous improvement, the at least one sleeve may be made from a semi-permeable material. The material can be chosen that it allows fluid to move through the sleeve but prevents bubbles, at least bubbles of a certain size, to move through the sleeve. It may be important to allow fluid to move through the sleeve in order to provide enough fluid for the at least one sensor to be analyzed. Even if the fluid is allowed to move through the sleeve, the movement of fluid may still be decreased compared to an arrangement without the sleeve.

At least the receptacle of the sleeve may have an overall cup-shape. A cup-shaped sleeve may effectively surround the at least one fluid sensor and provide an effective prevention of bubbles in the enclosed volume. The open side of the cup may be used for inserting the sensor system and/or the at least one fluid sensor.

It should be noted that the receptacle is not limited to a cup-shape. Other shapes may be used as well. For example, the receptacle may have an oval, rectangular or polygonal cross-section.

According to another advantageous improvement, the at least one through-opening may be provided with at least one flange surrounding the through-opening. This flange may be used to facilitate penetration of a suction tube through the through-opening and to provide a stable seat of the suction tube in the through-opening. Further, the flange may protect the boundary of the through-opening. This is especially helpful in the case that the sleeve is made from a soft material. A through-opening with a flange may also be used as sediment exhaust opening.

In order to provide a compact structure of the sleeve and a sensor system provided with said sleeve, the at least one through-opening may be arranged in a face of the bottom of the sleeve. Sensor systems often have overall longitudinal shapes, wherein a suction tube extends along the longitudinal axis. The arrangement of the at least one through-opening in a face of the bottom may facilitate leading the inlet port of a suction tube out of the sleeve during insertion of the sensor system into the sleeve. Also at least one through-opening which forms a sediment exhaust opening, may be arranged in the face of the bottom.

The bottom of the debubbling sleeve may be inclined with respect to a longitudinal axis of a circumferential section of the receptacle. The inclined bottom together with a wall section of the receptacle may form a region with an acute angle. In this region, sediments can be collected.

At least one through-opening may be arranged in the region with the acute angle for allowing sediments to leave the receptacle. In this case, this through-opening forms a sediment exhaust opening. For an effective transport of sediments out of the receptacle, it may be advantageous, if the sediment exhaust opening is arranged in the region where the bottom abuts the wall section, e.g. in the corner which is formed by the acute angle. However, due to manufacturing reasons, especially if the at least one through-opening is provided with a flange, the sediment exhaust opening may be arranged not directly in the region where the bottom abuts the wall section, but in the close vicinity to same. Preferably, this embodiment comprises a second through-opening for a suction tube.

According to another advantageous improvement, the at least one through-opening may be arranged on an extension of the sleeve extending basically extending basically radially to a longitudinal axis of the receptacle. The extension may have an overall tube shape, wherein a longitudinal axis of the tube extends basically radially with the longitudinal axis of the receptacle and/or parallel with the bottom of the sleeve. The extension may be used for collecting sediments and transporting the same away from the receptacle. This is especially helpful in the case that the sleeve comprises a second through-opening for a suction tube. In this case, it may be helpful to transport sediments away from the suction tube in order to prevent the sediments which have left the receptacle to be absorbed by the inlet port of the suction tube. If a suction tube is present, then the extension may extend perpendicular to the suction tube.

The sleeve may further comprise at least one mounting member for detachably mounting the sleeve to a sensor system. The mounting member may comprise latching elements for easily attaching and detaching the sleeve to the sensor system. The at least one mounting member may be arranged at an end of the sleeve being opposite to the bottom.

The sensor systems as mentioned above may be further improved in that the at least one suction tube extends through the sleeve and through the receptacle. Thereby, a compact sensor system may be achieved. Alternatively or additionally to the at least one suction tube, also a sensor rod carrying the at least one fluid sensor and/or at least one heating element may also be arranged inside the sleeve and/or inside the receptacle.

According to another advantageous improvement, each of the sensor systems may comprise a second through-opening. For example, the sensor system, wherein at least one suction tube protrudes through a through-opening, may have at least one further through-opening forming a sediment exhaust opening. The sensor system as mentioned above, which is provided with at least one sediment exhaust opening may be provided with at least one further through-opening through which a suction tube protrudes.

Each of the sensor systems may be provided with the desired number of through-openings, the desired number of sediments exhaust openings and the desired number of suction tubes or other elements that may need at least one through-opening. The desired number may change depending on the intended use of a sensor system.

In an operating position of the sensor system, the longitudinal axis of the sensor system may basically extend along a gravitational direction, in particular with the bottom of the sleeve pointing in the gravitational direction. This arrangement may allow bubbles which are present in the receptacle, to rise against the gravitational direction, away from the bottom and to leave the receptacle.

According to another advantageous improvement of a sensor system according to the invention, the inlet port of the suction tube may be provided with an inlet filter, the inlet filter being arranged outside the sleeve. This filter may be helpful to avoid sediments or frozen liquid to enter the suction tube. The filter may be mounted on the suction tube, on the bottom of the sleeve and/or on a flange surrounding at least one through-opening of the sleeve.

For connecting the sensor system to a fluid tank, the sensor system may further comprise a flange for connecting the sensor system to the fluid tank, wherein the sleeve is mounted to said flange. The sensor system and the sleeve may together form a unit which can be inserted into a fluid tank and which can be mounted with said flange to the surrounding of an opening in the fluid tank.

In order to effectively prevent the formation of bubbles, the sleeve may enclose the suction tube and a sensor rod carrying the at least one fluid sensor from the at least one through-opening to the flange.

In the following, the invention and its improvements are described in greater details using exemplary embodiments and with reference to the figures. As described above, the various features shown in the embodiments may be used independently of each other in specific applications.

In the following figures, elements having the same function and/or the same structure will be referenced by the same reference signs.

In the drawings:
- Fig. 1: shows a first embodiment of a sensor system according to the invention with a debubbling sleeve according to the invention in a non-assembled state in a perspective view;
- Fig. 2: shows the embodiment of Fig. 1 in a different view perpendicular to a longitudinal axis of the sleeve;
- Fig. 3: shows a close up view of the bottom of the receptacle of the embodiment of Fig. 1 with an inserted sensor system;
- Fig. 4: shows a second embodiment of a sensor system according to the invention with a debubbling sleeve according to the invention in a non-assembled state in a perspective view;
- Fig. 5: shows the second embodiment of Fig. 4 in an assembled state;
- Fig. 6: shows a third embodiment of a sensor system according to the invention with a debubbling sleeve according to the invention in a non-assembled state in a perspective view;
- Fig. 7: shows the third embodiment of Fig. 6 in an assembled state;

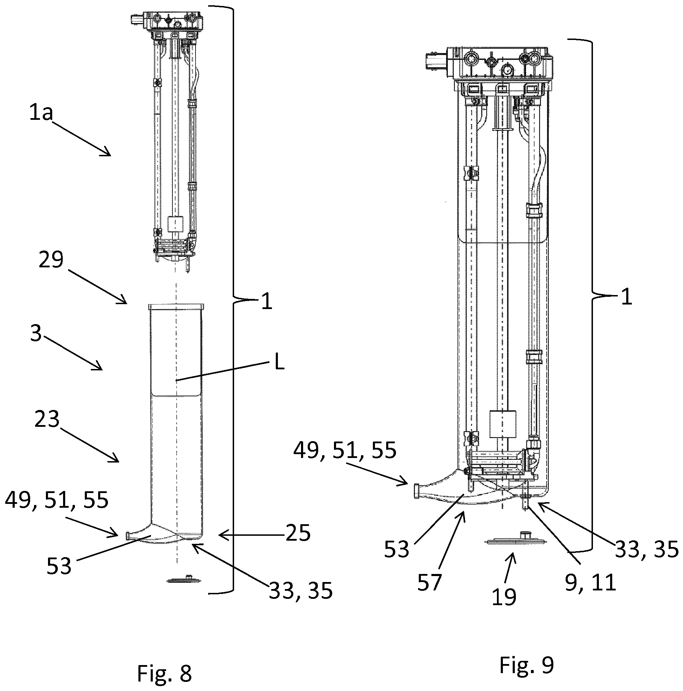

- Fig. 8: shows a fourth embodiment of a sensor system according to the invention with a debubbling sleeve according to the invention in a non-assembled state in a perspective view;
- Fig. 9: shows the third embodiment of Fig. 8 in an assembled state.

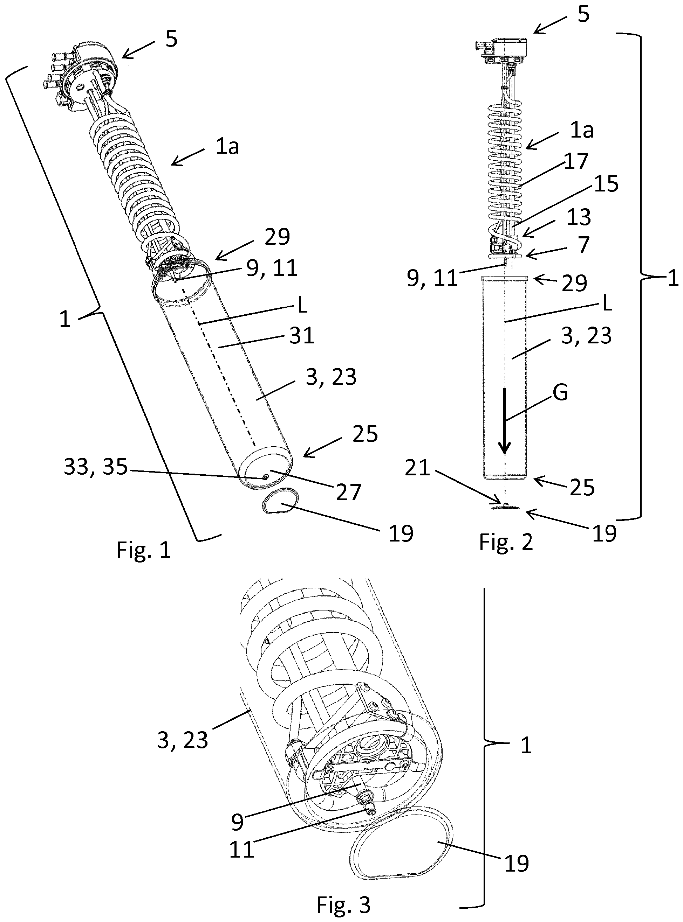

In the following, a first advantageous embodiment of a sensor system 1 and a debubbling sleeve 3 according to the invention is described with reference to Figs. 1 to 3. In the Figures, a complete sensor system 1 consists of a sensor system 1a and a debubbling sleeve 3 according to the invention.

The sensor system 1 comprises a flange 5 for connecting the sensor system 1 to a fluid tank. The flange 5 may also form a header for the sensor system 1 providing inlet and outlet posts for a fluid and other conduits which may be necessary for the sensor system. The sensor system 1 extends along a longitudinal axis L, longitudinally from the flange 5 towards a distal end 7. A suction tube 9 may extend from the flange 5 to the distal end 7, preferably in parallel with the longitudinal axis L. An inlet port 11 of the suction tube forms the end of the suction tube 9 and preferably protrudes away from the distal end 7 in parallel with the longitudinal axis L.

The sensor system 1 further comprises at least one fluid sensor 13, which is preferably provided on a sensor rod 15. The at least one fluid sensor 13 may be adapted for measuring the level of a fluid, the temperature, the concentration of a certain compound and/or other quantities. The sensor system 1 may further be provided with a temperature control arrangement 17, which may heat or cool a fluid which surrounds the sensor 13. In the figures, the temperature control arrangement 17 is shown as a spiral, which may either present an electrical heating coil or a pipe which allows a coolant to be transmitted through the sensor system 1.

Finally, the sensor system 1 may comprise an inlet filter 19 which can be connected to the inlet port 11 of the suction tube 9. The inlet filter 19 may have an adapter 21 with an opening (not shown) that allows the inlet port 11 of the suction tube 9 to be inserted into the adapter 21 to mount the inlet filter 19 on the inlet port 11.

In an operating position, for example shown in Figure 2, the longitudinal axis L of the sensor system 1 basically extends along a gravitational direction G.

The debubbling sleeve 3 provides a receptacle 23 for the fluid sensor 13, preferably for the whole sensor system 1a.

The debubbling sleeve 3 has a bottom 25 with a basically planar face 27. The receptacle 23 is closed circumferentially around the bottom 25. The receptacle 23 extends circumferentially along the longitudinal axis L. The receptacle 23, preferably the whole debubbling sleeve 3, has an overall cup shape. The end 29 being opposite to the bottom 25 of the debubbling sleeve 3 is preferably open for facilitating the insertion of the sensor system 1a into the debubbling sleeve 3. The end 29 may be provided with a rim or other elements that may be detachably connected to the flange 5 of the sensor system 1a.

The material 31 of the debubbling sleeve 3 is preferably a semipermeable material.

In the region of the bottom 25, preferably in the face 27 of the bottom 25, the debubbling sleeve 3 comprises the at least one through-opening 33. As shown in Figures 1 to 3, the through-opening 33 is preferably provided with a flange 35 which surrounds the through-opening 33. The flange 35 may help to stabilize the material 31 around the through-opening 33. In the embodiment shown in Figures 1 to 3, the through-opening 33 is intended for the suction tube 9 to protrude through the through-opening 33 such that the inlet port 11 is arranged outside the debubbling sleeve 3. This is shown in Figure 3, wherein the debubbling sleeve 3 is made transparent for better visibility. In the mounted state, the inlet port 11 is arranged outside the debubbling sleeve 3, whereas the majority of the suction tube 9 is arranged inside the debubbling sleeve 3. The suction tube 9 may be surrounded by the flange 35 at the through-opening 33. In an operating state (not shown), the inlet filter 19 may be mounted onto the suction tube 9 by insertion of the inlet port 11 into the adapter 21.

The sensor system 1 including the mounted debubbling sleeve 3 may, preferably with the inlet filter 19 mounted on the inlet port 11, be inserted in a fluid tank (not shown). In this case, the flange 5 may be connected to the tank. When the sensor system 1 is inserted in a fluid tank and surrounded by a fluid, then the debubbling sleeve 3 may effectively prevent the formation of bubbles at least inside the debubbling sleeve 3 by reducing the movement of fluid at least inside the debubbling sleeve 3. At the same time, the intake of fluid into the inlet port 11 is not influenced by the debubbling sleeve 3 since the inlet port 11 is arranged outside the debubbling sleeve 3.

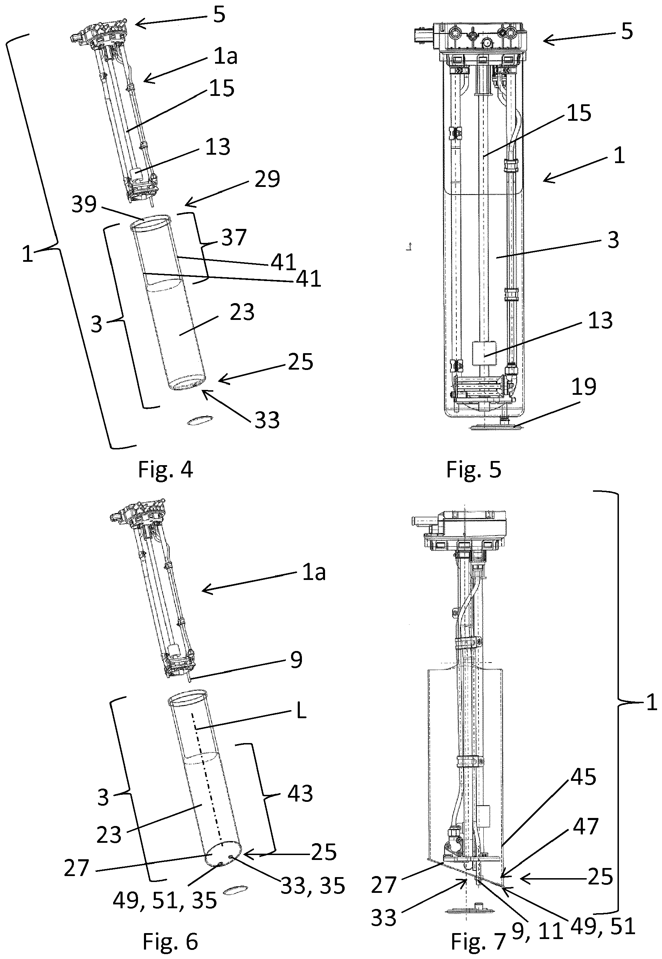

In the following, a second preferred embodiment of the invention is described with respect to Figures 4 and 5. For the sake of brevity, only the differences to the first embodiment are mentioned.

In contrast to the first embodiment, the second embodiment provides a debubbling sleeve 3 which is not completely formed to provide a receptacle 23. The debubbling sleeve 3 comprises a receptacle 23 which circumferentially surrounds the bottom 25 and a connection section 37 which extends from the end 29 to the receptacle 23. At the end 29, a ring-like mounting member 39 may be provided for mounting the debubbling sleeve 3 to the flange 5 of the sensor system 1a. The mounting member 39 may be connected to the receptacle 23 by preferably two supports 41. The supports 41 may either be made from the material 31 as part of the debubbling sleeve 3 forming the receptacle 23 or from any other suitable material. For example, the supports 41 may be made from a solid material.

The second embodiment may be advantageous in cases in which it is not necessary to receive the biggest part of the sensor system 1a in the receptacle 23. As shown in Figure 5, the sensor 13 is arranged inside the receptacle 23 in a mounted state. This might be sufficient in preventing the formation of bubbles in the area around the sensor 13.

Figures 6 and 7 present a third preferred embodiment of a sensor system 1 and a debubbling sleeve 3 according to the invention. Also, here, the embodiment is only described with respect to the differences compared to the first and second embodiments. The debubbling sleeve 3 has an overall shape which is similar to the one of the second embodiment, except for the region around the bottom 25. The debubbling sleeve 3 may also be generally shaped as the one from the first embodiment, except for the region around the bottom 25.

As for the previous embodiments, the debubbling sleeve 3 extends longitudinally along the longitudinal axis L and is circumferentially closed along the longitudinal axis L to form the receptacle 23. This part of the receptacle 23, which extends circumferentially along the longitudinal axis L, forms the circumferential section 43. The bottom 25 and the face 27 of the bottom 25 are inclined with respect to the longitudinal axis L. In other words, the bottom 25 is inclined with respect to a wall 45 of the receptacle 23. Between the wall 45 and the bottom 25 or the face 27 of the bottom 25, a region 47 is formed, wherein the wall 45 and the face 27 abut each other with an acute angle. In the region 47 with the acute angle, sediments may be collected.

The bottom 25 of the debubbling sleeve 3 is provided with two through-openings 33 and 49. The first through-opening 33 is comparable to the one as described with respect to the first two embodiments and allows a suction tube 9 of the sensor system 1 to protrude through the through-opening 33. The through-opening 33 may be provided with a flange 35.

The second through-opening 49 opens the bottom 25 in the region 47. The second through-opening 49 may also be provided with a flange 35. The through-opening 49 allows for sediments which are collected in the region 47 to exit the receptacle 23. Therefore, the through-opening 49 forms a sediment exhaust opening 51.

In the following, a fourth preferred embodiment of the debubbling sleeve 3 and a sensor system 1 according to the invention are described. Also here, the embodiment is only described with respect to the differences to the previously described embodiments.

The debubbling sleeve 3 is provided with an extension 53 in the region of the bottom 25, which extends basically perpendicular to the longitudinal axis L of the debubbling sleeve 3. Therefore, the extension 53 extends basically parallel with the bottom 25 of the debubbling sleeve 3.

At a distal end 55 of the extension, the extension 53 is provided with a through-opening 49. The through-opening 49 forms a sediment exhaust opening 51. The extension 53 tapers towards the through-opening 49. The extension 53 may be formed monolithically with the receptacle 23.

The extension 53 may help with transporting sediments away from the inlet port 11 of the suction tube 9. Therefore, the extension 53 is arranged on an opposite side of the debubbling sleeve 3 than the through-opening 33 through which the suction tube 9 extends. For good stability of the sediment exhaust opening 51, the through-opening 49 may be provided with a flange 35.

In order to allow sediments to be collected in the extension 53 prior to exhaustion, the extension 53 may have a belly-like mid-section 57, in which the extension 53 extends farther away from the end 29 of the debubbling sleeve 3 than the through-opening 49. If the longitudinal axis L is arranged basically parallel with a gravitational direction G, then the mid-section 57 may collect sediments which can be exhausted by the sediment exhaust opening 51. As already mentioned, the fourth embodiment comprises, additionally to two through-openings 49 which forms the sediment exhaust opening 51, a through-opening 33 for the suction tube 9. As the other embodiments, the inlet port 11 of the suction tube 9 is preferably provided with an inlet filter 19, which is arranged outside the debubbling sleeve 3.

### REFERENCE SIGNS

- 1, 1a: sensor system
- 3: debubbling sleeve
- 5: flange
- 7: distal end
- 9: suction tube
- 11: inlet port
- 13: fluid sensor
- 15: sensor rod
- 17: temperature control arrangement
- 19: inlet filter
- 21: adapter
- 23: receptacle
- 25: bottom
- 27: face of the bottom
- 29: end
- 31: material
- 33: through-opening
- 35: flange
- 37: connection section
- 39: mounting member
- 41: support
- 43: circumferential section
- 45: wall
- 47: region
- 49: through-opening
- 51: sediment exhaust opening
- 53: extension
- 55: distal end of extension
- 57: mid-section

- G: gravitational direction
- L: Longitudinal axis

## Claims

1. Sensor system (1) for a fluid system, in particular for a urea tank, comprising at least one fluid sensor (13) and at least one suction tube (9) with an inlet port (11) for the fluid, wherein the system (1) further comprises at least one debubbling sleeve (3) for keeping gas bubbles off the fluid sensor (13), wherein the debubbling sleeve (3) provides a receptacle (23) for the fluid sensor (13), the receptacle (23) being closed at least circumferentially around a bottom (25) of the debubbling sleeve (3), wherein the debubbling sleeve (3) comprises at least one through-opening (33, 49) in the region of the bottom (25), and wherein the at least one fluid sensor (13) is arranged inside the debubbling sleeve (3), **characterized in that** the at least one suction tube (9) protrudes through the at least one through-opening (33, 49) to an area outside the debubbling sleeve (3) such that the inlet port (11) is arranged outside the debubbling sleeve (3).

2. Sensor system (1) according to Claim 1, wherein the sensor system (1) basically extends along a longitudinal axis (L), wherein the debubbling sleeve (3) comprises an extension (53) which basically extends parallel to a radial direction of the longitudinal axis (L) of the sensor system (1), and wherein at least one through-opening (33, 49) of the debubbling sleeve (3) is arranged on the distal end (55) of the extension (53), forming a sediment exhaust opening (51).

3. Sensor system (1) according to Claim 2, wherein the debubbling sleeve (3) comprises a second through-opening (33, 49) through which the at least one suction tube (9) protrudes to an outside of the debubbling sleeve (3).

4. Sensor system (1) according to any of the Claims 1 to 3, wherein, in an operating position of the sensor system (1), the longitudinal axis (L) of the sensor system (1) basically extends along a gravitational direction (G).

5. Sensor system (1) according to any of the Claims 1 to 4,wherein the suction tube (9) is provided with an inlet filter (19), the inlet filter (19) being arranged outside the debubbling sleeve (3).

6. Sensor system (1) according to any of the Claims 1 to 5, wherein the sensor system (1) further comprises a flange (5) for connecting the sensor system (1) to a fluid tank and in that the debubbling sleeve (3) is mounted to said flange (5).

7. Sensor system (1) according to Claim 6, wherein the debubbling sleeve (3) encloses the suction tube (9) and a sensor rod (15) carrying the at least one fluid sensor (13) from the at least one through-opening (33, 49) to the flange (5).

8. Sensor system (1) according to any of the Claims 1 to 7, wherein at least the debubbling sleeve (3) is made from a semi-permeable material (31).

9. Sensor system (1) according to any of the Claims 1 to 8, wherein the debubbling sleeve (3) has an overall cup-shape.

10. Sensor system (1) according to any of the Claims 1 to 9, wherein the at least one through-opening (33, 49) is arranged in a face (27) of the bottom (25) of the debubbling sleeve (3).

11. Sensor system (1) according to any of the Claims 1 to 10, wherein the at least one through-opening (33, 49) is provided with at least one flange (35) surrounding the through-opening (33, 49).

12. Sensor system (1) according to any of the Claims 1 to 11, wherein the bottom (25) of the debubbling sleeve (3) is inclined with respect to a longitudinal axis (L) of a circumferential section (43) of the receptacle (23).

13. Sensor system (1) according to any of the Claims 1 to 12, wherein at least one through-opening (33, 49) is arranged on an extension (53) of the debubbling sleeve (3), the extension (53) extending basically radially to a longitudinal axis (L) of the receptacle (23).

## Patentansprüche

1. Sensor-System (1) für ein Fluid-System, insbesondere für einen Harnstoff-Tank, das wenigstens einen Fluid-Sensor (13) und wenigstens eine Ansaug-Rohrleitung (9) mit einer Einlassöffnung (11) für das Fluid umfasst, wobei das System (1) des Weiteren wenigstens eine Entgasungs-Hülse (3) umfasst, mit der Gasblasen von dem Fluid-Sensor (13) ferngehalten werden, wobei die Entgasungs-Hülse (3) eine Aufnahme (23) für den Fluid-Sensor (13) aufweist, die Aufnahme (23) wenigstens am Umfang um ein unteres Ende (25) der Entgasungs-Hülse (3) herum geschlossen ist, die Entgasungs-Hülse (3) wenigstens eine Durchgangsöffnung (33, 59) im Bereich des unteren Endes (25) umfasst und der wenigstens eine Fluid-Sensor (13) im Inneren der Entgasungs-Hülse (3) angeordnet ist, **dadurch gekennzeichnet, dass** die wenigstens eine Ansaug-Rohrleitung (9) durch die wenigstens eine Durchgangsöffnung (33, 49) hindurch in einen Bereich außerhalb der Entgasungs-Hülse (3) so vorsteht, dass die Einlassöffnung (11) außerhalb der Entgasungs-Hülse (3) angeordnet ist.

2. Sensor-System (1) nach Anspruch 1, wobei sich das Sensor-System (1) im Wesentlichen entlang einer Längsachse (L) erstreckt, die Entgasungs-Hülse (3) eine Verlängerung (53) umfasst, die sich im Wesentlichen parallel zu einer radialen Richtung der Längsachse (L) des Sensor-Systems (1) erstreckt und wenigstens eine Durchgangsöffnung (33, 49) der Entgasungs-Hülse (3) an dem vorderen Ende (55) der Verlängerung (53) angeordnet ist und eine Sediment-Ableitöffnung (51) bildet.

3. Sensor-System (1) nach Anspruch 2, wobei die Entgasungs-Hülse (3) eine zweite Durchgangsöffnung (33, 49) umfasst, über die die wenigstens eine Ansaug-Rohrleitung (9) zu einer Außenseite der Entgasungs-Hülse (3) vorsteht.

4. Sensor-System (1) nach einem der Ansprüche 1 bis 3, wobei in einer Funktionsposition des Sensor-Systems (1) die Längsachse (L) des Sensor-Systems (1) im Wesentlichen entlang einer Schwerkraft-Richtung (G) verläuft.

5. Sensor-System (1) nach einem der Ansprüche 1 bis 4, wobei die Ansaug-Rohrleitung (9) mit einem Einlass-Filter (19) versehen ist und der Einlass-Filter (19) außerhalb der Entgasungs-Hülse (3) angeordnet ist.

6. Sensor-System (1) nach einem der Ansprüche 1 bis 5, wobei das Sensor-System (1) des Weiteren einen Flansch (5) zum Verbinden des Sensor-Systems (1) mit einem Fluid-Tank umfasst, und die Entgasungs-Hülse (3) an dem Flansch (5) angebracht ist.

7. Sensor-System (1) nach Anspruch 6, wobei die Entgasungs-Hülse (3) die Ansaug-Rohrleitung (9) und eine Sensor-Stange (15), die den wenigstens einen Fluid-Sensor (13) trägt, von der wenigstens einen Durchgangsöffnung (33, 49) bis zu dem Flansch umschließt.

8. Sensor-System (1) nach einem der Ansprüche 1 bis 7, wobei die wenigstens eine Entgasungs-Hülse (3) aus einem halbdurchlässigen Material (31) besteht.

9. Sensor-System (1) nach einem der Ansprüche 1 bis 8 wobei die Entgasungs-Hülse (3) eine becherartige Gesamtform hat.

10. Sensor-System (1) nach einem der Ansprüche 1 bis 9, wobei die wenigstens eine Durchgangsöffnung (33, 49) in einer Fläche (27) des unteren Endes (25) der Entgasungs-Hülse (3) angeordnet ist.

11. Sensor-System (1) nach einem der Ansprüche 1 bis 10, wobei die wenigstens eine Durchgangsöffnung (33, 49) mit wenigstens einem Flansch (35) versehen ist, der die Durchgangsöffnung (33, 59) umgibt.

12. Sensor-System (1) nach einem der Ansprüche 1 bis 11, wobei das untere Ende (25) der Entgasungs-Hülse (3) in Bezug auf eine Längsachse (L) eines Umfangs-Teilabschnitts (43) der Aufnahme (23) geneigt ist.

13. Sensor-System (1) nach einem der Ansprüche 1 bis 12, wobei die wenigstens eine Durchgangsöffnung (33, 49) an einer Verlängerung (53) der Entgasungs-Hülse (3) angeordnet ist und sich die Verlängerung (53) im Wesentlichen radial zu einer Längsachse (L) der Aufnahme (23) erstreckt.

## Revendications

1. Système de capteur (1) pour un système de fluide, en particulier pour un réservoir d'urée, comprenant au moins un capteur de fluide (13) et au moins un tube d'aspiration (9) ayant un orifice d'entrée (11) pour le fluide, dans lequel le système (1) comprend en outre au moins un manchon de suppression de bulles (3) pour protéger le capteur de fluide (13) contre des bulles de gaz, le manchon de suppression de bulles (3) fournissant un réceptacle (23) pour le capteur de fluide (13), le réceptacle (23) étant fermé au moins circonférentiellement autour d'un fond (25) du manchon de suppression de bulles (3), le manchon de suppression de bulles (3) comprenant au moins une ouverture traversante (33, 49) dans la région du fond (25), et dans lequel le au moins un capteur de fluide (13) est agencé à l'intérieur du manchon de suppression de bulles (3), **caractérisé en ce que** le au moins un tube d'aspiration (9) fait saillie à travers la au moins une ouverture traversante (33, 49) vers une zone située à l'extérieur du manchon de suppression de bulles (3) de telle sorte que l'orifice d'entrée (11) est agencé à l'extérieur du manchon de suppression de bulles (3).

2. Système de capteur (1) selon la revendication 1, dans lequel le système de capteur (1) s'étend fondamentalement le long d'un axe longitudinal (L), dans lequel le manchon de suppression de bulles (3) comprend un prolongement (53) qui s'étend fondamentalement parallèlement à une direction radiale de l'axe longitudinal (L) du système de capteur (1), et dans lequel au moins une ouverture traversante (33, 49) du manchon de suppression de bulles (3) est agencée sur l'extrémité distale (55) du prolongement (53), formant une ouverture d'évacuation de sédiments (51).

3. Système de capteur (1) selon la revendication 2, dans lequel le manchon de suppression de bulles (3) comprend une seconde ouverture traversante (33, 49) à travers laquelle le au moins un tube d'aspiration (9) fait saillie vers un extérieur du manchon de suppression de bulles (3)

4. Système de capteur (1) selon l'une quelconque des revendications 1 à 3, dans lequel, dans une position de fonctionnement du système de capteur (1), l'axe longitudinal (L) du système de capteur (1) s'étend fondamentalement le long d'une direction gravitationnelle (G).

5. Système de capteur (1) selon l'une quelconque des revendications 1 à 4, dans lequel le tube d'aspiration (9) est muni d'un filtre d'entrée (19), le filtre d'entrée (19) étant agencé à l'extérieur du manchon de suppression de bulles (3).

6. Système de capteur (1) selon l'une quelconque des revendications 1 à 5, dans lequel le système de capteur (1) comprend en outre une bride (5) pour relier le système de capteur (1) à un réservoir de fluide et dans lequel le manchon de suppression de bulles (3) est monté sur ladite bride (5).

7. Système de capteur (1) selon la revendication 6, dans lequel le manchon de suppression de bulles (3) renferme le tube d'aspiration (9) et une tige de capteur (15) portant le au moins un capteur de fluide (13) depuis la au moins une ouverture traversante (33, 49) jusqu'à la bride (5).

8. Système de capteur (1) selon l'une quelconque des revendications 1 à 7, dans lequel au moins le manchon de suppression de bulles (3) est constitué d'un matériau semi-perméable (31).

9. Système de capteur (1) selon l'une quelconque des revendications 1 à 8, dans lequel le manchon de suppression de bulles (3) a une forme globale de coupelle.

10. Système de capteur (1) selon l'une quelconque des revendications 1 à 9, dans lequel la au moins une ouverture traversante (33, 49) est agencée dans une face (27) du fond (25) du manchon de suppression de bulles (3).

11. Système de capteur (1) selon l'une quelconque des revendications 1 à 10, dans lequel au moins la une ouverture traversante (33, 49) est munie d'au moins une bride (35) entourant l'ouverture traversante (33, 49).

12. Système de capteur (1) selon l'une quelconque des revendications 1 à 11, dans lequel le fond (25) du manchon de suppression de bulles (3) est incliné par rapport à un axe longitudinal (L) d'une section circonférentielle (43) du réceptacle (23).

13. Système de capteur (1) selon l'une quelconque des revendications 1 à 12, dans lequel au moins une ouverture traversante (33, 49) est agencée sur un prolongement (53) du manchon de suppression de bulles (3), le prolongement (53) s'étendant fondamentalement radialement vers un axe longitudinal (L) du réceptacle (23).
